# EUROPEAN PATENT SPECIFICATION

(11) **EP 3 839 910 B1**
(45) Date of publication and mention of the grant of the patent: **25.01.2023**
(21) Application number: 19217997.6
(22) Date of filing: 19.12.2019
(51) Int. Cl.: G08B 13/196

(54) **PRIORITIZATION AMONG CAMERAS OF A MULTI-CAMERA ARRANGEMENT**
PRIORISIERUNG UNTER KAMERAS EINER MULTIKAMERAANORDNUNG
PRIORISATION PARMI DES CAMÉRAS D'UN AGENCEMENT À CAMÉRAS MULTIPLES

(43) Date of publication of application: 23.06.2021
(73) Proprietor: Axis AB, 223 69 Lund (SE)
(72) Inventor: KESKIKANGAS, Axel, 423 69 Lund (SE); HARTZELL, Ted, 423 69 Lund (SE); FARZONE, Mazdak, 423 69 Lund (SE)
(74) Representative: Valea AB

(56) References cited:
- US-A1- 2012 119 879
- US-A1- 2015 103 178

## Description

### TECHNICAL FIELD

The present disclosure relates to prioritization among cameras of a multi-camera arrangement.

### BACKGROUND

By implementing a surveillance system, it may be possible to see what is happening in a specific surrounding - e.g. a part of a city, an open square, a city block, a road, an industrial site etc. - as it is happening. A multi-camera arrangement with cameras distributed geographically may provide real-time insights and information, which may be of interest, revealing and/or of help in one way or another. As a complement, a policeman or guard may carry alarm-supporting equipment enabling him or her, when deemed warranted - e.g. following an observed and/or reported criminal action - to trigger a geotagged alarm informing the surveillance system of said alarm along with a position of the policeman or guard. Moreover, additionally or alternatively, should for instance an object comprising a position-tracking device - such as e.g. a mobile phone or a vehicle - be observed and/or reported stolen or tampered with, then may in a similar manner a geotagged alarm be triggered, informing the surveillance system of said alarm along with a position of the object.

US 2015/103178 A1, for instance, relates to a video surveillance system having a control function for video acquisition and video display in the video surveillance system, whereas US 2012/119879 A1 relates to calibrating a camera in a surveillance system.

Commonly, when a geotagged alarm is triggered, an operator of such a surveillance system may select one or more cameras out of the multi-camera arrangement, to capture a surrounding covering the geotagged position.

Manual selection of cameras may, however, be inefficient and time consuming and further dependent on the operator's discretion, why there is a need for improvement.

### SUMMARY OF THE INVENTION

It is therefore an object of embodiments herein to provide an approach for in an improved and/or alternative manner prioritize one or more cameras out of a multi-camera arrangement,

The object above may be achieved by the subject-matter disclosed herein. The invention is defined by the independent claims. Embodiments are set forth in the appended claims, in the following description and in the drawings. The disclosed subject-matter relates to a method performed by an assessment system for prioritization among cameras of a multi-camera arrangement. The assessment system obtains respective geographical camera position and camera properties of each of the cameras. The assessment system further receives information data indicating a geographical object position and object features of a geotagged physical object positioned in a surrounding in a potential field of view of each of the cameras. Moreover, the assessment system determines - for each of the cameras - by comparing the object position and object features with the respective camera position and camera properties, a respective distance to the object position and a respective expected pixel size of the object at the respective distance. The assessment system furthermore compares respective image data of the surrounding derived from each of the cameras, with the respective expected pixel size. Moreover, the assessment system assigns each of the cameras a respective rating based on to what extent the respective image data corresponds to the respective expected pixel size.

The disclosed subject-matter further relates to an assessment system for - and/or adapted for - prioritization among cameras of a multi-camera arrangement. The assessment system comprises a camera obtaining unit for - and/or adapted for - obtaining respective geographical camera position and camera properties of each of the cameras. The assessment system further comprises a physical object receiving unit for- and/or adapted for- receiving information data indicating a geographical object position and object features of a geotagged physical object positioned in a surrounding in a potential field of view of each of the cameras. Moreover, the assessment system comprises an expectations determining unit for - an/or adapted for - determining for each of the cameras, by comparing the object position and object features with the respective camera position and camera properties, a respective distance to the object position and a respective expected pixel size of the object at the respective distance. The assessment system furthermore comprises a comparing unit for - and/or adapted for - comparing respective image data of the surrounding derived from each of the cameras, with the respective expected pixel size. Moreover, the assessment system comprises an assigning unit for - and/or adapted for - assigning each of the cameras a respective rating based on to what extent the respective image data corresponds to the respective expected pixel size.

Furthermore, the disclosed subject-matter relates to a surveillance system comprising an assessment system as described herein.

Moreover, the disclosed subject-matter relates to a computer program product comprising a computer program containing computer program code means arranged to cause a computer or a processor to execute the steps of the assessment system described herein, stored on a computer-readable medium or a carrier wave.

The disclosed subject-matter further relates to a non-volatile computer readable storage medium having stored thereon said computer program product.

Thereby, there is introduced an approach according to which there is assessed which camera is deemed best suited to capture a specific surrounding. That is, since the disclosure relates to prioritization among cameras of a multi-camera arrangement, and there is obtained respective geographical camera position and camera properties of each of the cameras, it may be established where each respective camera is located, along with intrinsic characteristics of respective camera. Furthermore, since there is received information data indicating a geographical object position and object features of a physical object positioned in a surrounding in a potential field of view of each of the cameras, it may be established where a geotagged physical object - e.g. a policeman or guard carrying alarm-supporting equipment or a person tampering with, or in possession of a stolen, position-tracking device - is located, along with characteristics of the object, e.g. indicating that said object is a human being. Moreover, since there is determined for each of the cameras, by comparing the object position and object features with the respective camera position and camera properties, a respective distance to the object position and a respective expected pixel size of the object at the respective distance, it may be established at what distances from respective camera the object is located, and subsequently, respective camera's expected size in pixels of the object at the respective distance. That is, the expected pixel size of the object is dependent on the distance to said object in combination with the camera properties, and accordingly, once respective distance and camera properties are established, so may the respective expected pixel size. Since there is further determined respective conformity of the respective expected pixel size with respective image data of the surrounding derived from each of the cameras, obtained respective image data - and/or one or more detected objects thereof - from the cameras of the surrounding, in which the physical object is positioned and/or determined to be positioned, is compared to the respective expected pixel size of the physical object applicable for respective camera. Accordingly, it may be established how well respective expected pixel size conforms with respective image data and/or one or more detected objects thereof, which may equate with to what extent respective camera is able to capture and/or detect the physical object. Moreover, since each of the cameras are assigned a respective rating based on respective determined conformity, respective camera may be ranked in view of its ability to detect and/or capture the physical object - and/or the surrounding covering the physical object - thus enabling for prioritization among said cameras. For instance, the higher conformity the higher rating, and subsequently, the higher rating the higher priority.

For that reason, an approach is provided for in an improved and/or alternative manner prioritize one or more cameras out of a multi-camera arrangement.

The technical features and corresponding advantages of the above mentioned method will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying assessment system according to embodiments of the disclosure;
**Fig. 2** illustrates a schematic view of exemplifying image data according to embodiments of the disclosure;
**Fig. 3** illustrates a schematic view of an exemplifying assessment system according to embodiments of the disclosure, at a subsequent point in time;
**Fig. 4** illustrates a schematic view of exemplifying subsequent image data according to embodiments of the disclosure;
**Fig. 5** is a schematic block diagram illustrating an exemplifying assessment system according to embodiments of the disclosure; and
**Fig. 6** is a flowchart depicting an exemplifying method performed by an assessment system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to prioritization among cameras of a multi-camera arrangement, there will be disclosed an approach assessing which camera is deemed best suited to capture a specific surrounding.

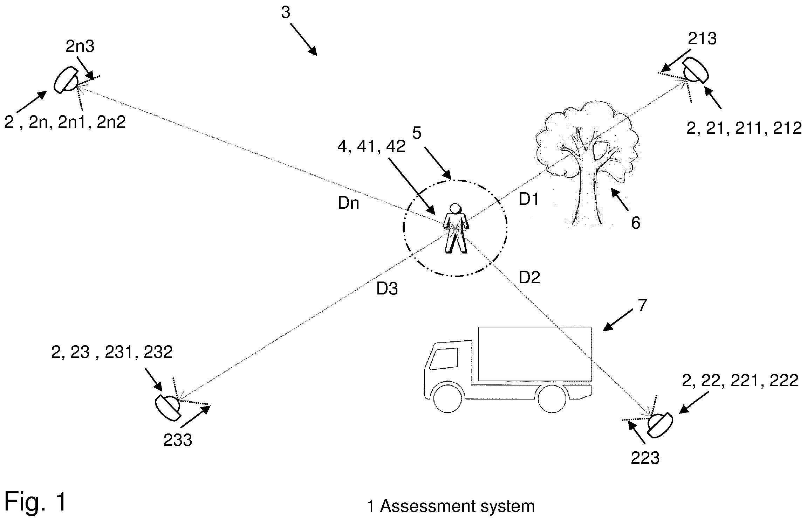

Referring now to the figures and **Fig. 1** in particular, there is depicted a schematic view of an exemplifying **assessment system 1** according to embodiments of the disclosure. The assessment system 1 is adapted and/or configured for prioritization among cameras of a **multi-camera arrangement 2**. The multi-camera arrangement 2 may comprise any arbitrary number of cameras deemed appropriate for the implementation at hand, for instance range from two up to hundreds of cameras. In exemplifying Fig. 1, there is depicted an exemplifying **first camera 21**, **second camera 22**, **a third camera 23** and an **n^{th} camera 2n**. Moreover, respective camera 21, 22, 23, 2n may refer to any arbitrary camera adapted to capture surroundings, such as visible light cameras, thermal cameras and/or infrared, IR, cameras, and further for instance support a variable and/or a fixed field of view. The cameras 21, 22, 23 2n of the multi-camera arrangement 2 may be distributed geographically in any arbitrary manner deemed appropriate for the implementation at hand, e.g. to support coverage of a specific surrounding.

Optionally, one or more cameras 21, 22, 23, 2n of the multi-camera arrangement 2 may be, and/or comprise, a - e.g. known - pan-tilt-zoom, PTZ, camera. Thereby, a more flexible field of view may be supported as compared to a fixed field of view.

The assessment system 1 - and further the multi-camera arrangement 2 - may be comprised in - and/or be in connection with - an exemplifying **surveillance system 3**. The exemplifying surveillance system 3 may refer to any - e.g. known - surveillance system covering a specific surrounding - such as e.g. a part of a city, an open square, a city block, a road, an industrial site etc. - comprising the necessary software and hardware for video management thereof.

"Assessment system" may refer to "viewability assessment system", "camera assessment system", "camera rating system", "camera selection system" and/or "control system", whereas the phrase "for prioritization among cameras" may refer to "for rating cameras", "for assigning ratings to cameras", "for prioritizing cameras" and/or "for selecting among cameras". "Cameras of a multi-camera arrangement", on the other hand, may refer to "cameras comprised in a multi-camera arrangement", whereas "multi-camera arrangement" may refer to "plurality of cameras". "Surveillance system" may refer to "camera surveillance system" and/or "surveillance system covering a specific surrounding, area and/or scene".

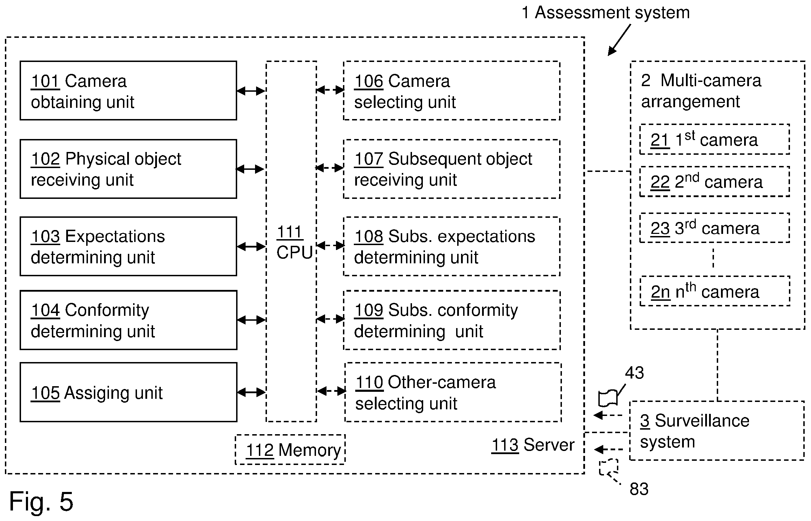

The assessment system 1 is - e.g. by means of a **camera obtaining unit 101** (shown and further described in Fig. 5) - adapted and/or configured for obtaining respective **geographical camera position 211, 221, 231, 2n1** and **camera properties 212, 222, 232, 2n2** of each of the cameras 21, 22, 23, 2n. Thereby, it may be established where each respective camera 21, 22, 23, 2n is located, along with intrinsic characteristics of respective camera 21, 22, 23, 2n.

For instance, one camera - which may have a first setup of camera properties - may be positioned at a first position, whereas another camera - which may have a second setup or similar camera properties - may be positioned at a second position.

The camera positions 211, 221, 231, 2n1 and/or camera properties 212, 222, 232, 2n2 may be obtained in any arbitrary - e.g. known - manner, such as obtained from a data table, database and/or server holding such cameras information. Additionally or alternatively, the camera positions 211, 221, 231, 2n1 and/or camera properties 212, 222, 232, 2n2 may be pre-stored in the assessment system 1, and/or derived from respective camera 21, 22, 23, 2n. The respective camera properties 212, 222, 232, 2n2 may refer to any properties of respective camera 21, 22, 23, 2n defining its intrinsic characteristics, such as resolution, zoom and/or image enhancement capability e.g. noise reduction. Moreover, camera properties of one camera may differ from camera properties of another camera.

"Obtaining" respective geographical camera position and camera properties may refer to "deriving" and/or "determining" respective geographical camera position and camera properties, whereas "geographical camera position" may refer to merely "camera position". "Camera properties", on the other hand, may refer to "camera characteristics", "intrinsic camera features", "camera parameters" and/or "camera specification", and according to an example further to "camera optical properties". The phrase "obtaining respective geographical camera position and camera properties of each of said cameras" may refer to "obtaining, for each of said cameras, a respective geographical camera position and respective camera properties", and/or to "determining respective geographical camera position and camera properties of each of said cameras from camera data indicating respective geographical camera position and camera properties". The assessment system 1 is - e.g. by means of a **physical object receiving unit 102** (shown and further described in Fig. 5) - adapted and/or configured for receiving **information data 43** (shown in Fig. 5) indicating a **geographical object position 41** and **object features 42** of a **physical object 4** positioned in a **surrounding 5** in a **potential field of view 213, 223, 233, 2n3** of each of the cameras 21, 22, 23, 2n. Thereby, it is established where a geotagged physical object 4 - e.g. a policeman or guard carrying alarm-supporting equipment (not shown) or a person tampering with, or in possession of a stolen, position-tracking device (not shown) - is located, along with characteristics 42 of the object 4, e.g. indicating that said object 4 is a human being.

The information data 43 may be received in any arbitrary - e.g. known - manner, such as received - e.g. via wire and/or wirelessly - from the exemplifying surveillance system 3 and/or a position/positioning retrieving system (not shown) associated with said surveillance system 3 and/or the assessment system 1. The physical object 4 may refer to any real object, such as e.g. a moving object and/or target, for instance a human being. According to an example, the physical object 4 may be represented by a vehicle. Moreover, the physical object 4 may be detected - and/or have been detected - in any arbitrary - e.g. known - manner, such as by means of image processing. The object features 42 may refer to any characteristics of the object 4, e.g. object type such as indicating that said object 4 e.g. is a human being, and/or characteristics indicating physical size - and/or proportions - of the object 4. Respective field of view 213, 223, 233, 2n3 of the cameras 21, 22, 23, 2n may be supported by default; additionally or alternatively, for instance should said cameras 21, 22, 23, 2n be represented by PTZ cameras, then said respective field of view 213, 223, 233, 2n3 may be "potential", i.e. supported following panning, tilting and/or zooming.

"Receiving" information data may refer to "deriving" information data, and according to an example further to "receiving at a first point in time" information data. "Information data", on the other hand, may refer to "an information message" and/or "an electronic and/or digital information message", whereas "information data indicating" may refer to "information data revealing and/or reflecting". "Geographical object position" may refer to merely "object position", whereas "object features" may refer to "object characteristics", "object properties" and/or "an object type". "Physical object" may refer to "real object" and/or "target", and according to an example further to "moving object" and/or "human being". "Positioned" in a surrounding, on the other hand, may refer to "determined and/or estimate" to be positioned" in a surrounding and/or "geotagged to be positioned" in a surrounding, whereas "surrounding in a potential field of view" may refer to "surrounding covered by a potential field of view" and/or "scene or area of a potential field of view". "Potential" field of view may refer to "potential respective" field of view and/or "supported" field of view, whereas "potential field of view" may refer to merely "field of view".

The assessment system 1 is - e.g. by means of an **expectations determining unit 103** (shown and further described in Fig. 5) - adapted and/or configured for determining for each of the cameras 21, 22, 23, 2n, by comparing the object position 41 and object features 42 with the respective camera position 211, 221, 231, 2n1 and camera properties 212, 222, 232, 2n2, a respective **distance D1, D2, D3, Dn** to the object position 41 and a respective expected pixel size of the object 4 at the respective distance D1, D2, D3, Dn. Thereby, it may be established at what distances D1, D2, D3, Dn from respective camera 21, 22, 23, 2n the object 4 is located, and subsequently, respective camera's 21, 22, 23, 2n expected size in pixels of the object 4 at the respective distance D1, D2, D3, Dn. That is, the expected pixel size of the object 4 is dependent on the distance D1, D2, D3, Dn to said object 4 in combination with the camera properties 212, 222, 232, 2n2, and accordingly, once respective distance D1, D2, D3, Dn and camera properties 212, 222, 232, 2n2 are established, so may the respective expected pixel size. In other words, having knowledge of a given distance D1, D2, D3, Dn to the object 4, given intrinsic characteristics 212, 22, 232, 2n2 of the corresponding camera 21, 22, 23, 2n and given physical size and/or proportions 42 of the object 4, there may be determined an estimated size and/or distribution of a pixel area representing said object 4 - at said distance D1, D2, D3, Dn - in a potential camera image of the given camera 21, 22, 23, 2n having the given camera properties 212, 222, 232, 2n2. The respective expected pixel sizes may be derived in any arbitrary manner deemed feasible for the implementation at hand, e.g. be derived from a pre-stored data table, database and/or server holding such information, e.g. from the exemplifying surveillance system 3 and/or from an external entity. Additionally or alternatively, said respective expected pixel sizes may be derived by respective camera 21, 22, 23, 2n, calculated in - or essentially in - real-time.

Respective distance D1, D2, D3, Dn to the object position 41 may refer to any arbitrary distance, for instance ranging from tenths of metres up to hundreds or even thousands of metres. In exemplifying Fig. 1, the exemplifying distance D2 from the second camera 22 to the object position 42 is depicted as the shortest distance, the exemplifying distance D3 from the third camera 23 to the object position 42 is depicted as the second shortest distance, the exemplifying distance D1 from the first camera 21 to the object position 42 is depicted as the second longest distance, and the exemplifying distance Dn from the nth camera 2n to the object position 42 is depicted as the longest distance. Respective expected pixel size may refer to any arbitrary size - e.g. in a vertical and/or a horizontal direction - for instance ranging from a few pixels up to hundreds or even thousands of pixels. Moreover, the respective expected pixel size may refer to outer contours of the physical object 4, and further comprise a combination of two or more pixel sizes, for instance a combination of a vertical pixel size and horizontal pixel size, and/or a plurality of vertical pixel sizes and a plurality of horizontal pixel sizes.

"Determining" may in this context refer to "calculating", whereas "expected pixel size" in this context may refer to "assumed pixel size". Expected "pixel size", on the other hand, may refer to expected "size in pixels", and according to an example further to expected "pixel height" and/or "pixel area distribution". The phrase "and a respective expected pixel size" may refer to "and, subsequently, a respective expected pixel size". According to an example, the phrase "a respective expected pixel size of said object" may refer to "a respective expected pixel size of said object in a potential camera image", "a respective expected pixel size of said object in a vertical or essentially vertical direction", "a respective expected pixel size of said object in a vertical or essentially vertical direction and/or in a horizontal or essentially horizontal direction", and/or "a respective expected shape and pixel size of said object". Moreover, the phrase "determining for each of said cameras, by comparing said object position and object features with said respective camera position and camera properties, a respective distance to said object position and a respective expected pixel size of said object at said respective distance" may refer to "determining for each of said cameras, by comparing said object position with said respective camera position, a respective distance to said object position, and by comparing said camera properties with said object features and said respective distance, a respective expected pixel size of said object at said respective distance".

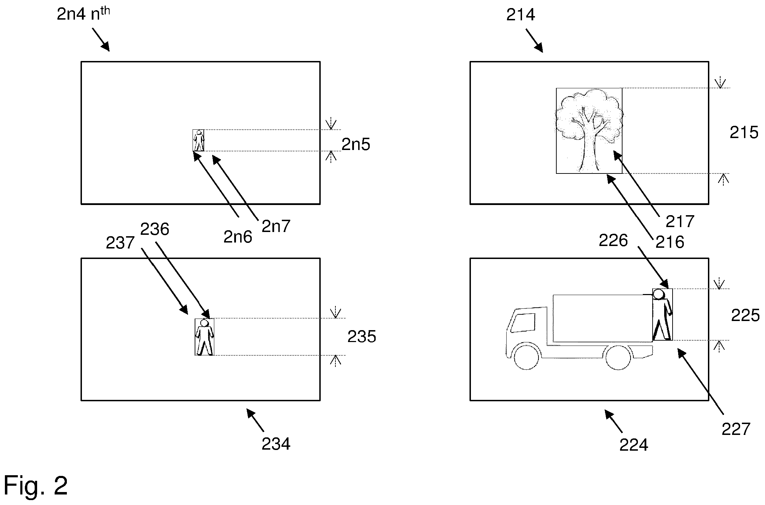

As exemplified in Fig. 2, the assessment system 1 is - e.g. by means of a **conformity determining unit 104** (shown and further described in Fig. 5) - adapted and/or configured for determining respective conformity of the respective expected pixel size, with respective **image data 214, 224, 234, 2n4** of the surrounding 5 derived from each of the cameras 21, 22, 23, 2n. Thereby, obtained respective image data 214, 224, 234, 2n4 - and/or one or more detected objects thereof - from the cameras 21, 22, 23, 2n of the surrounding 5 in which the physical object 4 is positioned and/or determined to be positioned, is compared to the respective expected pixel size of the physical object 4 applicable for respective camera 21, 22 ,23, 2n. That is, as depicted in exemplifying Fig. 2, the image data 214 derived from the first camera 21 is compared to an expected first pixel size of the physical object 4 applicable for the first camera 21, the image data 224 derived from the second camera 22 is compared to an expected second pixel size of the physical object 4 applicable for the second camera 22, the image data 234 derived from the third camera 23 is compared to an expected third pixel size of the physical object 4 applicable for the third camera 23, and the image data 2n4 derived from the n^{th} camera 2n is compared to an expected n^{th} pixel size of the physical object 4 applicable for the n^{th} camera 2n. Accordingly, it may be established how well respective expected pixel size conforms with respective image data 214, 224, 234, 2n4 and/or one or more detected objects thereof, which may equate with to what extent respective camera 21, 22, 23, 2n is able to capture and/or detect the physical object 4.

During the conformity comparison and/or check, one or more objects detected in respective image data 214, 224, 234, 2n4 may for instance be identified as having an object type - e.g. human - corresponding to the object 4, whereby respective pixel sizes of these detected objects may be compared to the respective expected pixel sizes.

For instance, as depicted in exemplifying Figs. 1 and 2, an exemplifying **first obstacle 6** - such as a tree - may at least partly - here depicted to fully - block the view of the surrounding 5 comprising the physical object 4 for the first camera 21, which results in the image data 214 from the first camera 21 - and/or a **first detected object 217** thereof - conforming with the expected first pixel size of the physical object 4 to a very low extent, thus resulting in a very low conformity. In a similar manner, an exemplifying **second obstacle 7** - such as a truck - may at least partly block the view of the surrounding 5 comprising the physical object 4 for the second camera 22, which results in the image data 224 from the second camera 22 - and/or a **second detected object 227** thereof - conforming with the expected second pixel size of the physical object 4 to a rather low extent, thus resulting in a relatively low conformity. The image data 234 from the third camera 23, on the other hand, and/or a **third detected object 237** thereof, is depicted to conform with the expected third pixel size to a great extent, thus resulting in a relatively high conformity. In a similar manner, the image data 2n4 from the n^{th} camera 2n - and/or an **n^{th} detected object 2n7** thereof, is depicted to likewise conform with the expected n^{th} pixel size to a great extent, thus resulting in a relatively high conformity. Respective conformity may for instance reflect a respective percentage and/or proportion of conformity.

Optionally, and as exemplified in Fig. 2, the assessment system 1 - and/or rather the conformity determining unit 104 thereof - may be adapted for determining respective conformity of the respective expected pixel size, with a **pixel size 215, 225, 235, 2n5** of a **bounding box 216, 226, 236, 2n6** of a detected object 217, 227, 237, 2n7 - or a portion such as a head thereof - in respective image data 214, 224, 234, 2n4 of the surrounding 5 derived from each of the cameras 21, 22, 23, 2n.

"Determining respective conformity of" may refer to "determining respective resemblance and/or matching of", "determining a respective conformity of" and/or "comparing", whereas "respective conformity" may refer to "respective conformity value and/or parameter" and/or merely "conformity". "With respective image data", on the other hand, may refer to "with respective at least a first detected object of image data". According to an example, "with respective image data" may further refer to "with respective pixel size of at least a first detected object of image data", "with respective pixel size of a portion - such as a head - of at least a first detected object of image data" and/or "with respective pixel size - in a vertical direction and/or in a horizontal direction - of at least a first detected object of image data". The term "respective image data" may refer to "a respective image" and/or "a respective image frame", whereas "derived" from each of the cameras may refer to "received and/or obtained" from each of the cameras and/or "captured by and derived" from each of the cameras.

The assessment system 1 is - e.g. by means of an **assigning unit 105** (shown and further described in Fig. 5) - adapted and/or configured for assigning each of the cameras 21, 22, 23, 2n a respective rating based on respective determined conformity. Thereby, respective camera 21, 22, 23, 2n may be ranked in view of its ability to detect and/or capture the physical object 4 - and/or the surrounding 5 covering the physical object 4 - thus enabling for prioritization among said cameras 21, 22, 23, 2n. For instance, the higher conformity the higher rating, and subsequently, the higher rating the higher priority. In exemplifying Fig. 1, the first camera 21 may accordingly be determined to have the lowest rating in that the first obstacle 6 fully obstructs the view of the physical object 4 from the first camera 21, the second camera 22 determined to have the next lowest rating in that the second obstacle 7 at least partly obstructs the view of the physical object 4 from the second camera 22, the third camera 23 determined to have the highest rating and the n^{th} camera 2n similarly having the highest ranking - or potentially the second highest rating - in that the image data 234, 2n4 of the third camera 23 and the n^{th} camera 2n both demonstrate high conformity with respective expected pixel size of the physical object 4.

"Assigning each of said cameras a respective rating" may refer to "assigning digitally each of said cameras a respective rating" and/or "rating each of said cameras", whereas "rating" may refer to "priority" and/or "ranking". "Based on respective determined conformity", on the other hand, may refer to "based on respective degree of determined conformity" and/or merely to "based on respective conformity", whereas assigning "a respective rating" may refer to assigning "in an ascending or descending order a respective rating". "Rating" may further refer to "rating indicative of a priority of the camera".

Optionally, the rating of at least one camera of said cameras 21, 22, 23, 2n may additionally be based on at least one additional parameter. Thereby, consideration may be given to other criteria than merely degree of conformity between respective image data 214, 224, 234, 2n4 and the respective expected pixel size of the physical object 4. Accordingly, pertinent the at least one additional parameter, one camera representing a lower degree of conformity than another camera, may nonetheless be assigned a more prioritized rating.

To what extent the one or more additional parameters affect the corresponding rating as compared to degree of conformity, may be selected as deemed appropriate for the implementation at hand. The at least one additional parameter may be derived in any arbitrary - e.g. known - manner, for instance from a data table, database and/or server holding such information, from the exemplifying surveillance system 3, from the at least one camera and/or from an external entity. "Be based on" at least one additional parameter may refer to "weigh in" and/or "take into consideration" at least one additional parameter, whereas "based on at least one additional parameter" may refer to "based on additional input data".

Such an additional parameter may for instance comprise the camera properties 212, 222, 232, 2n2 - or a selection thereof - of the at least one camera 21, 22, 23, 2n. Thereby, consideration may be given to intrinsic characteristics of the camera 21, 22, 23, 2n, such as resolution, zoom and/or image enhancement capability e.g. noise reduction, affecting quality of the image data 214, 224, 234, 2n4 derived therefrom. For instance, one camera 21, 22, 23, 2n with camera properties 212, 222, 232, 2n2 representing high resolution may be considered to have a higher priority than another camera 21, 22, 23, 2n with camera properties 212, 222, 232, 2n2 representing lower resolution.

Additionally or alternatively, such an additional parameter may comprise the distance D1, D2, D3, Dn between the at least one camera 21, 22, 23, 2n and the object position 41. Thereby, consideration may be given to the distance D1, D2, D3, Dn between the physical object 4 and the camera 21, 22, 23, 2n. For instance, one camera 21, 22, 23, 2n with a relatively short distance D1, D2, D3, Dn to the object position 41 may be considered to have a higher priority than another camera 21, 22, 23, 2n with a relatively extensive distance D1, D2, D3, Dn to the object position 41.

Additionally or alternatively, such an additional parameter may comprise the geographical position 211, 221, 231, 2n1 of the at least one camera 21, 22, 23, 2n. Thereby, consideration may be given to where the at least one camera 21, 22, 23, 2n is positioned, and for instance circumstances applicable for that position 211, 221, 231, 2n1. For instance, one camera 21, 22, 23, 2n positioned in vicinity of plural other cameras 21, 22, 23, 2n may be considered to have a higher priority than another camera 21, 22, 23, 2n positioned in vicinity of few other cameras 21, 22, 23, 2n.

Additionally or alternatively, such an additional parameter may comprise the potential field of view 213, 223, 233, 2n3 of the at least one camera 21, 22, 23, 2n. Thereby, consideration may be given to coverage ability. For instance, one camera 21, 22, 23, 2n with a rather narrow potential field of view 213, 223, 233, 2n3 may be considered to have a higher priority than another camera 21, 22, 23, 2n with a wider potential field of view 213, 223, 233, 2n3,

Additionally or alternatively, such an additional parameter may comprise a pan, tilt and/or zoom capability of the at least one camera 21, 22, 23, 2n. Thereby, consideration may be given to the camera's 21, 22, 23, 2n ability to pan, tilt and/or zoom. For instance, one camera 21, 22, 23, 2n with a relatively restricted ability to pan, tilt and/or zoom - e.g. a fixed camera - may be considered to have a higher priority than another camera 21, 22, 23, 2n with a less restricted ability to pan, tilt and/or zoom, e.g. a PTZ camera.

Additionally or alternatively, such an additional parameter may comprise a spectrum of the at least one camera 21, 22, 23, 2n. Thereby, consideration may be given to whether the camera 21, 22, 23, 2n is e.g. a visual light camera, thermal camera or IR camera. For instance, one camera 21, 22, 23, 2n supporting an IR spectrum may be considered to have a higher priority than another camera 21, 22, 23, 2n supporting a visual light spectrum.

Additionally or alternatively, such an additional parameter may comprise an auto tracking capability of the at least one camera 21, 22, 23, 2n. Thereby, consideration may be given to the camera's 21, 22, 23, 2n ability of auto tracking. For instance, one camera 21, 22, 23, 2n with a relatively high ability to auto track - e.g. the physical object 4 - may be considered to have a higher priority than another camera 21, 22, 23, 2n with a lower ability to auto track.

Additionally or alternatively, such an additional parameter may comprise an orientation of the physical object 4 relative the at least one camera 21, 22, 23, 2n. Thereby, consideration may be given to e.g. what direction the physical object 4 - e.g. a person tampering with, or in possession of a stolen, position-tracking device - is determined to be turned towards. For instance, one camera 21, 22, 23, 2n which the physical object 4 is determined to be facing or essentially facing may be considered to have a higher priority than another camera 21, 22, 23, 2n from which the physical object 4 is turned away.

Additionally or alternatively, such an additional parameter may comprise an unavailability of the at least one camera 21, 22, 23, 2n. Thereby, consideration may be given to whether a camera 21, 22, 23, 2n is occupied, reserved and/or for any arbitrary reason not available or merely available to a limited extent. For instance, one camera 21, 22, 23, 2n which is available may be considered to have a higher priority than another camera 21, 22, 23, 2n which is unavailable, e.g. occupied.

Additionally or alternatively, such an additional parameter may comprise a current point in time. Thereby, consideration may be given to what time it is, such as date, day of week, time of day etc. For instance, one camera 21, 22, 23, 2n may be considered to have a higher priority than another camera 21, 22, 23, 2n depending on what time and/or date it is.

Additionally or alternatively, such an additional parameter may comprise a weather condition. Thereby, consideration may be given to what weather it is, such as rain, snow and/or fog. For instance, one camera 21, 22, 23, 2n may be considered to have a higher priority than another camera 21, 22, 23, 2n depending on the weather conditions.

Optionally, the assessment system 1 may - e.g. by means of an optional **camera selection unit 106** (shown and further described in Fig. 5) - be adapted and/or configured for selecting a camera out of said cameras 21, 22, 23, 2n based on the respective rating. Thereby, the camera or cameras with the highest priority may be selected, for instance to subsequently capture images of the surrounding 5. In exemplifying Figs. 1-2, the third camera 23 is selected in an exemplifying manner.

"Selecting" a camera may refer to "the assessment system selecting" a camera and/or "selecting subsequently" a camera, whereas the phrase "selecting a camera out of said cameras based on said respective rating" according to an example may refer to "selecting a camera out of said cameras with the highest and/or most prioritized rating".

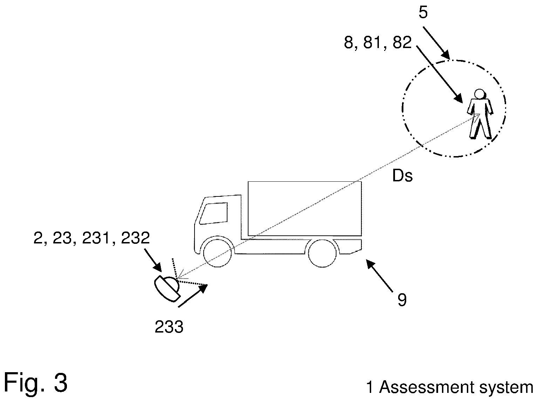

Optionally, as exemplified in **Fig. 3**, the assessment system 1 may - e.g. by means of an optional **subsequent object receiving unit 107** (shown and further described in Fig. 5) - be adapted and/or configured for receiving at a subsequent point in time, **subsequent information data 83** indicating a **subsequent geographical object position 81** and **subsequent object features 82** of a **subsequent physical object 8** positioned in the surrounding 5. Thereby, it may be established that a geotagged subsequent physical object 8 is located within the previously discussed surrounding 5, and further established the characteristics 82 thereof.

The subsequent point in time may refer to any arbitrary feasible time, for instance ranging from a few milliseconds up to minutes, hours, days or even years from when the previously discussed actions may have taken place e.g. at an exemplifying first point in time. Moreover, the subsequent information data 83 may be received in any arbitrary - e.g. known - manner, such as received - e.g. via wire and/or wirelessly - from the exemplifying surveillance system 3 and/or a position/positioning retrieving system (not shown) associated with said surveillance system 3 and/or the assessment system 1. The subsequent physical object 8 may refer to any real object, such as e.g. a moving object and/or target, for instance a human being. According to an example, the subsequent physical object 8 may be represented by a vehicle. The subsequent physical object 8, here exemplified as a human being, may - or may not - refer to the previously discussed physical object 4. The subsequent object features 82 may refer to any characteristics of the object 82, e.g. object type, such as indicating that said object 8 e.g. is a human being.

"Receiving" subsequent information data may refer to "deriving" subsequent information data, whereas "subsequent" may refer to "second". "Subsequent information data", on the other hand, may refer to "a subsequent information message" and/or "a subsequent electronic and/or digital information message", whereas "subsequent information data indicating" may refer to "subsequent information data revealing and/or reflecting". "Geographical subsequent object position" may refer to merely "subsequent object position", whereas "subsequent object features" may refer to "subsequent object characteristics", "subsequent object properties" and/or "a subsequent object type". "Subsequent physical object" may refer to "subsequent real object" and/or "subsequent target", and according to an example further to "moving subsequent object" and/or "subsequent human being". "Positioned" in the surrounding, on the other hand, may refer to "positioned essentially" in the surrounding, "determined and/or estimated to be positioned" in the surrounding, and/or "geotagged to be positioned" in the surrounding,

Further optionally, the assessment system 1 may - e.g. by means of an optional **subsequent expectations determining unit 108** (shown and further described in Fig. 5) - be adapted and/or configured for determining for the selected camera 23, by comparing the subsequent object position 81 and subsequent object features 82 with the camera position 231 and camera properties 232 of the selected camera 23, a **subsequent distance Ds** to the subsequent object position 81 and an expected subsequent pixel size of the subsequent object 8 at the subsequent distance Ds. Thereby, it may be established at what distance Ds from the selected camera 23 the subsequent object 8 is located, and subsequently, the selected camera's 23 expected size in pixels of the subsequent object 8 at the subsequent distance Ds. That is, the expected pixel size of the subsequent object 8 is dependent on the distance Ds to said subsequent object 8 in combination with the camera properties 232, and accordingly, once the subsequent distance D3 and camera properties 232 are established, so may the expected pixel size.

The subsequent distance Ds to the subsequent object position 81 may refer to any arbitrary distance, for instance ranging from tenths of metres up to hundreds or even thousands of metres. The expected subsequent pixel size may refer to any arbitrary size - e.g. in a vertical and/or a horizontal direction - for instance ranging from a few pixels up to hundreds or even thousands of pixels. Moreover, the expected subsequent pixel size may refer to outer contours of the subsequent physical object 8, and further comprise a combination of two or more pixel sizes, for instance a combination of a vertical pixel size and horizontal pixel size, and/or a plurality of vertical pixel sizes and a plurality of horizontal pixel sizes.

"Determining" may in this context refer to "calculating", whereas "expected subsequent pixel size" in this context may refer to "assumed subsequent pixel size". Expected subsequent "pixel size", on the other hand, may refer to expected subsequent "size in pixels", and according to an example further to expected subsequent "pixel height". The phrase "and an expected subsequent pixel size" may refer to "and, subsequently, an expected subsequent pixel size". According to an example, the phrase "an expected subsequent pixel size of said subsequent object" may refer to "an expected subsequent pixel size of said subsequent object in a vertical or essentially vertical direction". Additionally or alternatively, the foregoing phrase may moreover refer to "an expected subsequent pixel size of said subsequent object in a vertical or essentially vertical direction and/or in a horizontal or essentially horizontal direction". Said phrase may further, additionally or alternatively, refer to "an expected subsequent shape and pixel size of said subsequent object". Moreover, the phrase "determining for the selected camera, by comparing said subsequent object position and subsequent object features with said camera position and camera properties of the selected camera, a distance to said subsequent object position and an expected subsequent pixel size of said subsequent object at said subsequent distance" may refer to "determining for said selected camera, by comparing said subsequent object position with said camera position of the selected camera, a subsequent distance to said subsequent object position, and by comparing said camera properties of the selected camera with said subsequent object features and said subsequent distance, an expected subsequent pixel size of said subsequent object at said subsequent distance". "Subsequent distance" may refer to merely "distance".

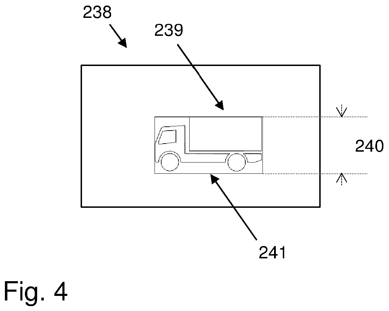

Moreover optionally, and as exemplified in **Fig. 4**, the assessment system 1 may - e.g. by means of an optional **subsequent conformity determining unit 109** (shown and further described in Fig. 5) - be adapted and/or configured for determining conformity of the expected subsequent pixel size with **subsequent image data 238** of the surrounding 5 derived from the selected camera 23. Thereby, obtained subsequent image data 238 from the selected camera 23 of the surrounding 5 in which the subsequent physical object 8 is positioned and/or determined to be positioned, is compared to the expected subsequent pixel size of the subsequent physical object 8 applicable for selected camera 23. Accordingly, it may be established how well the expected subsequent pixel size conforms with the subsequent image data 238, which may equate with to what extent the selected camera 23 is able to capture and/or detect the subsequent physical object 8.

For instance, as depicted in exemplifying Figs. 3 and 4, an exemplifying **third obstacle 9** - here in an exemplifying manner referring to the already discussed second obstacle 7 namely a truck - may at least partly - here depicted to fully - block the view of the surrounding 5 comprising the subsequent physical object 8 for the third camera 23, which results in the subsequent image data 238 from the third camera 23 - and/or a **subsequent detected object 239** thereof - conforming with the expected subsequent pixel size of the subsequent physical object 8 to a very low extent, thus resulting in a very low conformity. The conformity may for instance reflect a percentage and/or proportion of conformity.

According to an example, and as exemplified in Fig. 4, the assessment system 1- and/or rather the subsequent conformity determining unit 109 thereof - may be adapted for determining conformity of the subsequent expected pixel size, with a subsequent **pixel size 240** of a **bounding box 241** of a subsequent detected object 238 - or a portion such as a head thereof - in the subsequent image data 238 of the surrounding 5 derived the selected camera 23.

"Determining conformity of" may refer to "determining resemblance and/or matching of", "determining a conformity of" and/or "comparing", whereas "conformity" may refer to "conformity value and/or parameter" and/or "subsequent conformity". "With subsequent image data", on the other hand, may refer to "with at least a first detected object of said subsequent image data", According to an example, "with subsequent image data" may further refer to "with a pixel size of at least a first detected object of said subsequent image data", "with a pixel size of a portion - such as a head - of at least a first detected object of said subsequent image data" and/or "with a pixel size - in a vertical direction and/or in a horizontal direction - of at least a first detected object of said subsequent image data". The term "subsequent image data" may refer to "a subsequent image" and/or "a subsequent image frame", whereas "derived" from the selected camera may refer to "received and/or obtained" from the selected camera and/or "captured by and derived" from the selected camera.

Yet further optionally, the assessment system 1 may - e.g. by means of an optional **other-camera selecting unit 110** (shown and further described in Fig. 5) - be adapted and/or configured for selecting a camera 21, 22, 2n other than the selected camera 23 out of said cameras 21, 22, 23, 2n, based on the assigned respective rating, when the subsequent conformity is below a (predeterminable) viewability threshold. Thereby, when it is established that the conformity is lower than a threshold, i.e. that the selected camera's 23 ability to detect and/or capture the surrounding 5 - and/or the subsequent physical object 8 - is severed, then another camera 21, 22, 2n may be selected in its place. Accordingly, another camera 21, 22, 2n is selected in view of the previously determined respective ratings, for instance the camera which was previously deemed to have the e.g. second highest ranking, which in exemplifying Figs. 1-2 was exemplified as the n^{th} camera 2n.

The viewability threshold may be set to any arbitrary level deemed suitable for the implementation at hand, for instance range from tens of percent up to above about 95 percent.

"Selecting" a camera may refer to "the assessment system selecting" a camera and/or "selecting subsequently" a camera, whereas the phrase "selecting a camera based on the assigned said respective rating" according to an example may refer to "selecting a camera with the next highest and/or next most prioritized rating". "Subsequent conformity", on the other hand, may refer to merely "conformity", whereas "viewability threshold" may refer to "predeterminable viewability threshold", "viewability threshold value", "conformity threshold" and/or merely "threshold". The phrase "when the subsequent conformity is below a viewability threshold" may refer to "should the subsequent conformity fall below a viewability threshold".

As further shown in **Fig. 5**, which is a schematic block diagram illustrating an exemplifying assessment system 1 according to embodiments of the disclosure, the assessment system 1 comprises a camera obtaining unit 101, a physical object receiving unit 102, an expectations determining unit 103, a conformity determining unit 104, an assigning unit 105, an optional camera selecting unit 106, an optional subsequent object receiving unit 107, an optional subsequent expectations determining unit 108, an optional subsequent conformity determining unit 109 and an optional other-camera selecting unit 110, all of which already have been described in greater detail above. Furthermore, the embodiments herein for prioritization among cameras 21, 22, 23, 2n of a multi-camera arrangement 2 may be implemented through one or more processors, such as a **processor 111,** here denoted CPU, together with computer program code for performing the functions and actions of the embodiments herein. Said program code may also be provided as a computer program product, for instance in the form of a data carrier carrying computer program code for performing the embodiments herein when being loaded into the assessment system 1. One such carrier may be in the form of a CD ROM disc and/or a hard drive, it is however feasible with other data carriers. The computer program code may furthermore be provided as pure program code on a server and downloaded to the assessment system 1. The assessment system 1 may further comprise a **memory 112** comprising one or more memory units. The memory 112 may be arranged to be used to store e.g. information, and further to store data, configurations, schedulings, and applications, to perform the methods herein when being executed in the assessment system 1. For instance, the computer program code may be implemented in the firmware, stored in FLASH memory 112, of an embedded processor 111, and/or downloaded wirelessly e.g. from an off-board server. Furthermore, said units 101-110, the optional processor 111 and/or the optional memory 112 may at least partly be comprised in e.g. one or more **servers 113**, which may be comprised and/or be connected to the optional surveillance system 3. Those skilled in the art will also appreciate that said units 101-110 described above may refer to a combination of analog and digital circuits, and/or one or more processors configured with software and/or firmware, e.g. stored in a memory such as the memory 112, that when executed by the one or more processors such as the processor 111 perform as described herein. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Further shown in Fig. 5 is the multi-camera arrangement 2, the optional surveillance system 3, the information data 43 and optional subsequent information data 83, all of which have been discussed in greater detail above.

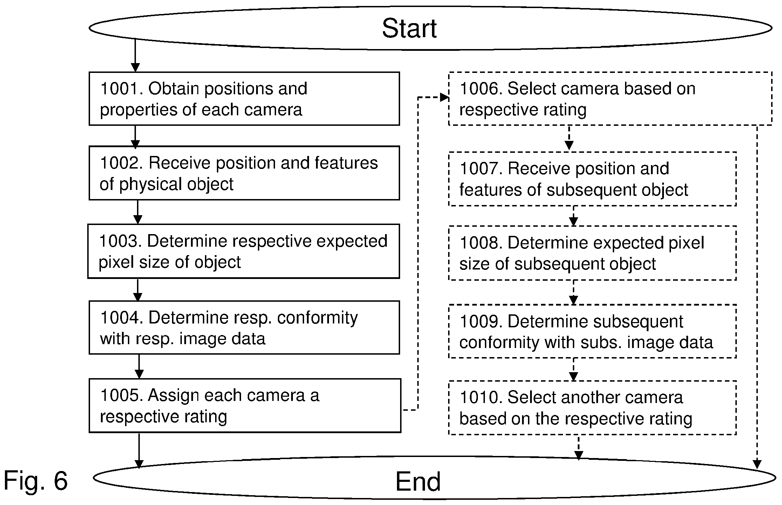

**Fig. 6** is a flowchart depicting an exemplifying method performed by an assessment system 1 according to embodiments of the disclosure. Said method is for prioritization among cameras 21, 22, 23, 2n of a multi-camera arrangement 2. The exemplifying method, which may be continuously repeated, comprises one or more of the following actions discussed with support from Figs. 1-5. Moreover, the actions may be taken in any suitable order and/or one or more actions may be performed simultaneously and/or in alternate order where applicable. For instance, Action 1002 may be performed simultaneously with and/or prior to Action 1001,

### Action 1001

In Action 1001, the assessment system 1 obtains - e.g. with support from the camera obtaining unit 101 - respective geographical camera position 211, 221, 231, 2n1 and camera properties 212, 222, 232, 2n2 of each of the cameras 21, 22, 23, 2n.

### Action 1002

In Action 1002, the assessment system 1 receives - e.g. with support from the physical object receiving unit 102 - information data 43 indicating a geographical object position 41 and object features 42 of a physical object 4 positioned in a surrounding 5 in a potential field of view 213, 223, 233, 2n3 of each of the cameras 21, 22, 23, 2n.

### Action 1003

In Action 1003, the assessment system 1 determines - e.g. with support from the expectations determining unit 103 - for each of the cameras 21, 22, 23, 2n, by comparing the object position 41 and object features 42 with the respective camera position 211, 221, 231, 2n1 and camera properties 212, 222, 232, 2n2, a respective distance D1, D2, D3, Dn to the object position 41 and a respective expected pixel size of the object 4 at the respective distance D1, D2, D3, Dn.

### Action 1004

In Action 1004, the assessment system 1 determines - e.g. with support from the conformity determining unit 104 - respective conformity of the respective expected pixel size, with respective image data 214, 224, 234, 2n4 of the surrounding 5 derived from each of the cameras 21, 22, 23, 2n.

### Action 1005

In Action 1005, the assessment system 1 assigns - e.g. with support from the assigning unit 105 - each of the cameras 21, 22, 23, 2n a respective rating based on respective determined conformity.

### Action 1006

In optional Action 1006, the assessment system 1 may select - e.g. with support from the optional camera selecting unit 106 - a camera 23 out of said cameras 21, 22, 23, 2n based on the respective rating.

### Action 1007

In optional Action 1007, the assessment system 1 may receive - e.g. with support from the subsequent object receiving unit 107 - at a subsequent point in time, subsequent information data 83 indicating a subsequent object position 81 and subsequent object features 82 of a subsequent physical object 8 positioned in the surrounding 5.

### Action 1008

In optional Action 1008, the assessment system 1 may determine - e.g. with support from the subsequent expectations determining unit 108 - for the selected camera 23, by comparing the subsequent geographical object position 81 and subsequent object features 82 with the camera position 231 and camera properties 232 of the selected camera 23, a subsequent distance Ds to the subsequent object position 81 and an expected subsequent pixel size of the subsequent object 8 at the subsequent distance Ds.

### Action 1009

In optional Action 1009, the assessment system 1 may determine - e.g. with support from the subsequent conformity determining unit 109 - conformity of the expected subsequent pixel size with subsequent image data 238 of the surrounding 5 derived from the selected camera 23.

### Action 1010

In optional Action 1010, the assessment system 1 may select - e.g. with support from the other-camera selecting unit 110 - a camera 21, 22, 2n other than the selected camera 23 out of said cameras 21, 22, 23, 2n, based on the assigned respective rating, when the subsequent conformity is below a viewability threshold.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by an assessment system (1) for prioritization among cameras (21, 22, 23, 2n) of a multi-camera arrangement (2), said method comprising:
***obtaining*** (1001) respective geographical camera position (211, 221, 231, 2n1) and camera properties (212, 222, 232, 2n2) of each of said cameras (21, 22, 23, 2n);
***receiving*** (1002), e.g. from a surveillance system (3) in connection with said assessment system (1), information data (43) indicating a geographical object position (41) and object features (42) of a geotagged physical object (4) determined to be positioned in a surrounding (5) in a potential field of view (213, 223, 233, 2n3) of each of said cameras (21, 22, 23, 2n);
***determining*** (1003) for each of said cameras (21, 22, 23, 2n), by comparing said object position (41) and object features (42) with said respective camera position (211, 221, 231, 2n1) and camera properties (212, 222, 232, 2n2), a respective distance (D1, D2, D3, Dn) to said object position (41) and a respective expected pixel size of said object (4) at said respective distance (D1, D2, D3, Dn);
***determining*** (1004) respective conformity of said respective expected pixel size, with respective image data (214, 224, 234, 2n4) of said surrounding (5) derived from each of said cameras (21, 22, 23, 2n); and
***assigning*** (1005) each of said cameras (21, 22, 23, 2n) a respective rating based on respective determined conformity.

2. The method according to claim 1, wherein said ***determining*** (1004) respective conformity comprises determining respective conformity of said respective expected pixel size, with a pixel size (215, 225, 235, 2n5) of a bounding box (216, 226, 236, 2n6) of a detected object (217, 227, 237, 2n7) in respective image data (214, 224, 234, 2n4) of said surrounding (5) derived from each of said cameras (21, 22, 23, 2n).

3. The method according to claim 1 or 2, wherein the rating of at least one camera (21, 22, 23, 2n) of said cameras (21, 22, 23, 2n) additionally is based on at least one additional parameter, comprising one or more of:
the camera properties (212, 222, 232, 2n2) of said at least one camera (21, 22, 23, 2n);
the distance (D1, D2, D3, Dn) between said at least one camera (21, 22, 23, 2n) and said object position (41);
the geographical position (211, 222, 232, 2n2) of said at least one camera (21, 22, 23, 2n);
the potential field of view (213, 223, 233, 2n3) of said at least one camera (21, 22, 23, 2n);
a pan, tilt and/or zoom capability of said at least one camera (21, 22, 23, 2n);
a spectrum of said at least one camera (21, 22, 23, 2n);
an auto tracking capability of said at least one camera (21, 22, 23, 2n);
an orientation of said physical object (4) relative said at least one camera (21, 22, 23, 2n);
an unavailability of said at least one camera (21, 22, 23, 2n);
a current point in time; and/or
a weather condition.

4. The method according to any one of claims 1-3, wherein one or more of said cameras (21, 22, 23, 2n) is a pan-tilt-zoom, PTZ, camera.

5. The method according to any one of claims 1-4, further comprising:
***selecting*** (1006) a camera out of said cameras based on said respective rating.

6. The method according to claim 5, further comprising:
***receiving*** (1007) at a subsequent point in time, subsequent information data (83) indicating a subsequent geographical object position (81) and subsequent object features (82) of a subsequent physical object (8) positioned in said surrounding (5);
***determining*** (1008) for the selected camera (23), by comparing said subsequent object position (81) and subsequent object features (82) with the camera position (231) and camera properties (232) of the selected camera (23), a subsequent distance (Ds) to said subsequent object position (81) and an expected subsequent pixel size of said subsequent object (8) at said subsequent distance (Ds);
***determining*** (1009) conformity of said expected subsequent pixel size (240) with subsequent image data (238) of said surrounding (5) derived from said selected camera (23); and
***selecting*** (1010) a camera (21, 22, 2n) other than said selected camera (23) out of said cameras (21, 22, 23, 2n), based on the assigned said respective rating, when the subsequent conformity is below a viewability threshold.

7. An **assessment system** (1) for prioritization among cameras (21, 22, 23, 2n) of a multi-camera arrangement (2), said assessment system (1) comprising:
a **camera obtaining unit** (101) for ***obtaining*** (1001) respective geographical camera position (211, 221, 231, 2n1) and camera properties (212, 222, 232, 2n2) of each of said cameras (21, 22, 23, 2n);
a **physical object receiving unit** (102) for ***receiving*** (1002), e.g. from a surveillance system (3) in connection with said assessment system (1), information data (43) indicating a geographical object position (41) and object features (42) of a geotagged physical object (4) determined to be positioned in a surrounding (5) in a potential field of view (213, 223, 233, 2n3) of each of said cameras (21, 22, 23, 2n);
an **expectations determining unit** (103) for ***determining*** (1003) for each of said cameras (21, 22, 23, 2n), by comparing said object position (41) and object features (42) with said respective camera position (211, 221, 231, 2n1) and camera properties (212, 222, 232, 2n2), a respective distance (D1, D2, D3, Ds) to said object position (41) and a respective expected pixel size of said object (4) at said respective distance (D1, D2, D3, Dn);
a **conformity determining unit** (104) for ***determining*** (1004) respective conformity of said respective expected pixel size, with respective image data (214, 224, 234, 2n4) of said surrounding (5) derived from each of said cameras (21, 22, 23, 2n); and
an **assigning unit** (105) for ***assigning*** (105) each of said cameras (21, 22, 23, 2n) a respective rating based on to respective determined conformity.

8. The assessment system (1) according to claim 7, wherein said conformity determining unit (104) is adapted for determining respective conformity of said respective expected pixel size , with a pixel size (215, 225, 235, 2n5) of a bounding box (216, 226, 236, 2n6) of a detected object (217, 227, 237, 2n7) in respective image data (214, 224, 234, 2n4) of said surrounding (5) derived from each of said cameras (21, 22, 23, 2n).

9. The assessment system (1) according to claim 7 or 8, wherein the rating of at least one camera (21, 22, 23, 2n) of said cameras (21, 22, 23, 2n) additionally is based on at least one additional parameter, comprising one or more of:
the camera properties (212, 222, 232, 2n2) of said at least one camera (21, 22, 23, 2n);
the distance (D1, D2, D3, Dn) between said at least one camera (21, 22, 23, 2n) and said object position (41);
the geographical position (211, 222, 232, 2n2) of said at least one camera (21, 22, 23, 2n);
the potential field of view (213, 223, 233, 2n3) of said at least one camera (21, 22, 23, 2n);
a pan, tilt and/or zoom capability of said at least one camera (21, 22, 23, 2n);
a spectrum of said at least one camera (21, 22, 23, 2n);
an auto tracking capability of said at least one camera (21, 22, 23, 2n);
an orientation of said physical object (4) relative said at least one camera (21, 22, 23, 2n);
an unavailability of said at least one camera (21, 22, 23, 2n);
a current point in time; and/or
a weather condition.

10. The assessment system (1) according to any one of claims 7-9, wherein one or more of said cameras (21, 22, 23, 2n) is a pan-tilt-zoom, PTZ, camera.

11. The assessment system (1) according to any one of claims 7-10, further comprising:
a **camera selecting unit** (106) for ***selecting*** (1006) a camera (23) out of said cameras (21, 22, 23, 2n) based on said respective rating.

12. The assessment system (1) according to claim 11, further comprising:
a **subsequent object receiving unit** (107) for ***receiving*** (1007) at a subsequent point in time, subsequent information data (83) indicating a subsequent geographical object position (81) and subsequent object features (82) of a subsequent physical object (8) positioned in said surrounding (5);
a **subsequent expectations determining unit** (108) for ***determining*** (1008) for the selected camera (23), by comparing said subsequent object position (81) and subsequent object features (82) with the camera position (231) and camera properties (232) of the selected camera (23), a subsequent distance (Ds) to said subsequent object position (81) and an expected subsequent pixel size of said subsequent object (8) at said subsequent distance (Ds);
a **subsequent conformity determining unit** (109) for ***determining*** (1009) conformity of said expected subsequent pixel size (240), with subsequent image data (238) of said surrounding (54) derived from said selected camera (23); and
an **other-camera selecting unit** (110) for ***selecting*** (1010) a camera (21, 22, 2n) other than said selected camera (23) out of said cameras (21, 22, 23, 2n), based on the assigned said respective rating, when the subsequent conformity is below a viewability threshold.

13. A **surveillance system** (3) comprising an assessment system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

## Patentansprüche

1. Verfahren, das durch ein Bewertungssystem (1) für eine Priorisierung unter Kameras (21, 22, 23, 2n) einer Mehrkameraanordnung (2) durchgeführt wird, das Verfahren umfassend:
***Erhalten*** (1001) einer jeweiligen geographischen Kameraposition (211, 221, 231, 2n1) und von Kameraeigenschaften (212, 222, 232, 2n2) jeder der Kameras (21, 22, 23, 2n);
***Empfangen*** (1002), z. B. von einem Überwachungssystem (3) in Verbindung mit dem Bewertungssystem (1), von Informationsdaten (43), die eine geografische Objektposition (41) angeben, und von Objektmerkmalen (42) eines geografisch markierten physischen Objekts (4), das bestimmt wird, in einer Umgebung (5) in einem potenziellen Sichtfeld (213, 223, 233, 2n3) jeder der Kameras (21, 22, 23, 2n) positioniert zu werden;
***Bestimmen*** (1003) für jede der Kameras (21, 22, 23, 2n), durch Vergleichen der Objektposition (41) und der Objektmerkmale (42) mit der jeweiligen Kameraposition (211, 221, 231, 2n1) und den Kameraeigenschaften (212, 222, 232, 2n2), eines jeweiligen Abstands (D1, D2, D3, Dn) zu der Objektposition (41) und einer jeweiligen erwarteten Pixelgröße des Objekts (4) in dem jeweiligen Abstand (D1, D2, D3, Dn);
***Bestimmen*** (1004) jeweiliger Konformität der jeweiligen erwarteten Pixelgröße mit jeweiligen Bilddaten (214, 224, 234, 2n4) der Umgebung (5), die von jeder der Kameras (21, 22, 23, 2n) abgeleitet werden; und
***Zuweisen*** (1005) jeder der Kameras (21, 22, 23, 2n) einer jeweiligen Bewertung basierend auf jeweils bestimmter Konformität.

2. Verfahren nach Anspruch 1, wobei das ***Bestimmen*** (1004) jeweiliger Konformität das Bestimmen jeweiliger Konformität der jeweiligen erwarteten Pixelgröße, mit einer Pixelgröße (215, 225, 235, 2n5) eines Begrenzungsrahmens (216, 226, 236, 2n6) eines erfassten Objekts (217, 227, 237, 2n7) in jeweiligen Bilddaten (214, 224, 234, 2n4) der Umgebung (5), die von jeder der Kameras (21, 22, 23, 2n) abgeleitet werden, umfasst.

3. Verfahren nach Anspruch 1 oder 2, wobei die Bewertung mindestens einer Kamera (21, 22, 23, 2n) der Kameras (21, 22, 23, 2n) zusätzlich auf mindestens einem zusätzlichen Parameter basiert, umfassend eines oder mehrere von:
die Kameraeigenschaften (212, 222, 232, 2n2) der mindestens einen Kamera (21, 22, 23, 2n);
den Abstand (D1, D2, D3, Dn) zwischen der mindestens einen Kamera (21, 22, 23, 2n) und der Objektposition (41);
die geografische Position (211, 222, 232, 2n2) der mindestens einen Kamera (21, 22, 23, 2n);
das potenzielle Sichtfeld (213, 223, 233, 2n3) der mindestens einen Kamera (21, 22, 23, 2n);
eine Schwenk-, Neige- und/oder Zoomfunktion der mindestens einen Kamera (21, 22, 23, 2n);
ein Spektrum der mindestens einen Kamera (21, 22, 23, 2n);
eine automatische Verfolgungsfähigkeit der mindestens einen Kamera (21, 22, 23, 2n);
eine Ausrichtung des physischen Objekts (4) relativ zu der mindestens einen Kamera (21, 22, 23, 2n);
eine Nichtverfügbarkeit der mindestens einen Kamera (21, 22, 23, 2n);
einen aktuellen Zeitpunkt; und/oder
eine Wetterbedingung.

4. Verfahren nach einem der Ansprüche 1 bis 3, wobei eine oder mehrere der Kameras (21, 22, 23, 2n) eine Schwenk-, Neige-, Zoom-Kamera (PTZ-Kamera) ist.

5. Verfahren nach einem der Ansprüche 1 bis 4, ferner umfassend:
***Auswählen*** (1006) einer Kamera aus den Kameras basierend auf der jeweiligen Bewertung.

6. Verfahren nach Anspruch 5, ferner umfassend:
***Empfangen*** (1007), zu einem nachfolgenden Zeitpunkt, von nachfolgenden Informationsdaten (83), die eine nachfolgende geographische Objektposition (81) und nachfolgende Objektmerkmale (82) eines nachfolgenden physischen Objekts (8) angeben, das in der Umgebung (5) positioniert ist;
***Bestimmen*** (1008) für die ausgewählte Kamera (23), durch Vergleichen der nachfolgenden Objektposition (81) und der nachfolgenden Objektmerkmale (82) mit der Kameraposition (231) und Kameraeigenschaften (232) der ausgewählten Kamera (23), eines nachfolgenden Abstands (Ds) zu der nachfolgenden Objektposition (81) und einer erwarteten nachfolgenden Pixelgröße des nachfolgenden Objekts (8) an dem nachfolgenden Abstand (Ds);
***Bestimmen*** (1009) von Konformität der erwarteten nachfolgenden Pixelgröße (240) mit nachfolgenden Bilddaten (238) der Umgebung (5), die von der ausgewählten Kamera (23) abgeleitet werden; und
***Auswählen*** (1010) einer anderen Kamera (21, 22, 2n) als der ausgewählten Kamera (23) aus den Kameras (21, 22, 23, 2n), basierend auf der zugewiesenen jeweiligen Bewertung, wenn die nachfolgende Konformität unter einer Sichtbarkeitsschwelle liegt.

7. **Bewertungssystem** (1) für die Priorisierung unter Kameras (21, 22, 23, 2n) einer Mehrkameraanordnung (2), das Bewertungssystem (1) umfassend:
eine **Kameraerhaltungseinheit** (101) zum ***Erhalten*** (1001) der jeweiligen geografischen Kameraposition (211, 221, 231, 2n1) und der Kameraeigenschaften (212, 222, 232, 2n2) jeder der Kameras (21, 22, 23, 2n);
eine **Empfangseinheit (102) für physische Objekte** zum ***Empfangen*** (1002), z. B. von einem Überwachungssystem (3) in Verbindung mit dem Bewertungssystem (1), von Informationsdaten (43), die eine geografische Objektposition (41) angeben, und von Objektmerkmalen (42) eines geografisch markierten physischen Objekts (4), das bestimmt wird, in einer Umgebung (5) in einem potenziellen Sichtfeld (213, 223, 233, 2n3) jeder der Kameras (21, 22, 23, 2n) positioniert zu werden;
eine **Erwartungsbestimmungseinheit** (103) zum ***Bestimmen*** (1003) für jede der Kameras (21, 22, 23, 2n), durch Vergleichen der Objektposition (41) und der Objektmerkmale (42) mit der jeweiligen Kameraposition (211, 221, 231, 2n1) und den Kameraeigenschaften (212, 222, 232, 2n2), eines jeweiligen Abstands (D1, D2, D3, Dn) zu der Objektposition (41) und einer jeweiligen erwarteten Pixelgröße des Objekts (4) in dem jeweiligen Abstand (D1, D2, D3, Dn);
eine **Konformitätsbestimmungseinheit** (104) zum ***Bestimmen*** (1004) jeweiliger Konformität der jeweiligen erwarteten Pixelgröße mit jeweiligen Bilddaten (214, 224, 234, 2n4) der Umgebung (5), die von jeder der Kameras (21, 22, 23, 2n) abgeleitet werden; und
eine **Zuweisungseinheit** (105) zum ***Zuweisen*** (105) jeder der Kameras (21, 22, 23, 2n) einer jeweiligen Bewertung basierend auf jeweils bestimmter Konformität.

8. Bewertungssystem (1) nach Anspruch 7, wobei die Konformitätsbestimmungseinheit (104) zum Bestimmen jeweiliger Konformität der jeweiligen erwarteten Pixelgröße, mit einer Pixelgröße (215, 225, 235, 2n5) eines Begrenzungsrahmens (216, 226, 236, 2n6) eines erfassten Objekts (217, 227, 237, 2n7) in jeweiligen Bilddaten (214, 224, 234, 2n4) der Umgebung (5), die von jeder der Kameras (21, 22, 23, 2n) abgeleitet werden, angepasst ist.

9. Bewertungssystem (1) nach Anspruch 7 oder 8, wobei die Bewertung mindestens einer Kamera (21, 22, 23, 2n) der Kameras (21, 22, 23, 2n) zusätzlich auf mindestens einem zusätzlichen Parameter basiert, umfassend eines oder mehrere von:
die Kameraeigenschaften (212, 222, 232, 2n2) der mindestens einen Kamera (21, 22, 23, 2n);
den Abstand (D1, D2, D3, Dn) zwischen der mindestens einen Kamera (21, 22, 23, 2n) und der Objektposition (41);
die geografische Position (211, 222, 232, 2n2) der mindestens einen Kamera (21, 22, 23, 2n);
das potenzielle Sichtfeld (213, 223, 233, 2n3) der mindestens einen Kamera (21, 22, 23, 2n);
eine Schwenk-, Neige- und/oder Zoomfunktion der mindestens einen Kamera (21, 22, 23, 2n);
ein Spektrum der mindestens einen Kamera (21, 22, 23, 2n);
eine automatische Verfolgungsfähigkeit der mindestens einen Kamera (21, 22, 23, 2n);
eine Ausrichtung des physischen Objekts (4) relativ zu der mindestens einen Kamera (21, 22, 23, 2n);
eine Nichtverfügbarkeit der mindestens einen Kamera (21, 22, 23, 2n);
einen aktuellen Zeitpunkt; und/oder
eine Wetterbedingung.

10. Bewertungssystem (1) nach einem der Ansprüche 7 bis 9, wobei eine oder mehrere der Kameras (21, 22, 23, 2n) eine Schwenk-, Neige-, Zoom-Kamera (PTZ-Kamera) ist.

11. Bewertungssystem (1) nach einem der Ansprüche 7 bis 10, ferner umfassend:
eine **Kameraauswahleinheit** (106) zum ***Auswählen*** (1006) einer Kamera (23) aus den Kameras (21, 22, 23, 2n) basierend auf der jeweiligen Bewertung.

12. Bewertungssystem (1) nach Anspruch 11, ferner umfassend:
eine **nachfolgende Objektempfangseinheit** (107) zum ***Empfangen*** (1007), zu einem nachfolgenden Zeitpunkt, von nachfolgenden Informationsdaten (83), die eine nachfolgende geographische Objektposition (81) und nachfolgende Objektmerkmale (82) eines nachfolgenden physischen Objekts (8) angeben, das in der Umgebung (5) positioniert ist;
eine **nachfolgende Erwartungsbestimmungseinheit** (108) zum ***Bestimmen*** (1008) für die ausgewählte Kamera (23), durch Vergleichen der nachfolgenden Objektposition (81) und der nachfolgenden Objektmerkmale (82) mit der Kameraposition (231) und Kameraeigenschaften (232) der ausgewählten Kamera (23), eines nachfolgenden Abstands (Ds) zu der nachfolgenden Objektposition (81) und einer erwarteten nachfolgenden Pixelgröße des nachfolgenden Objekts (8) an dem nachfolgenden Abstand (Ds);
eine **nachfolgende Konformitätsbestimmungseinheit** (109) zum ***Bestimmen*** (1009) von Konformität der erwarteten nachfolgenden Pixelgröße (240) mit nachfolgenden Bilddaten (238) der Umgebung (54), die von der ausgewählten Kamera (23) abgeleitet werden; und
eine **Auswahleinheit für eine andere Kamera** (110) zum ***Auswählen*** (1010) einer anderen Kamera (21, 22, 2n) als der ausgewählten Kamera (23) aus den Kameras (21, 22, 23, 2n), basierend auf der zugewiesenen jeweiligen Bewertung, wenn die nachfolgende Konformität unter einer Sichtbarkeitsschwelle liegt.

13. **Überwachungssystem** (3), umfassend ein Bewertungssystem (1) nach einem der Ansprüche 7 bis 12.

14. Computerprogrammprodukt, umfassend ein Computerprogramm, das Computerprogrammcodiermittel enthält, die angeordnet sind, um einen Computer oder einen Prozessor zu veranlassen, die Schritte eines Verfahrens nach einem der Ansprüche 1 bis 6 auszuführen, die auf einem computerlesbaren Medium oder einer Trägerwelle gespeichert sind.

15. Nicht flüchtiges computerlesbares Speichermedium, das das Computerprogrammprodukt nach Anspruch 14 darauf gespeichert aufweist.

## Revendications

1. Procédé mis en oeuvre par un système d'évaluation (1) pour la priorisation parmi des caméras (21, 22, 23, 2n) d'un agencement à caméras multiples (2), ledit procédé comprenant :
***l'obtention*** (1001) de la position géographique respective de la caméra (211, 221, 231, 2n1) et des propriétés de caméra (212, 222, 232, 2n2) de chacune desdites caméras (21, 22, 23, 2n) ;
***la réception*** (1002), par exemple, à partir d'un système de surveillance (3) en relation avec ledit système d'évaluation (1), de données d'information (43) indiquant une position géographique d'objet (41) et des caractéristiques d'objet (42) d'un objet physique géolocalisé (4) déterminé comme étant positionné dans un environnement (5) dans un champ de vision potentiel (213, 223, 233, 2n3) de chacune desdites caméras (21, 22, 23, 2n) ;
***la détermination*** (1003) pour chacune desdites caméras (21, 22, 23, 2n), en comparant ladite position d'objet (41) et lesdites caractéristiques d'objet (42) avec ladite position de caméra respective (211, 221, 231, 2n1) et lesdites propriétés de caméra (212, 222, 232, 2n2), d'une distance respective (D1, D2, D3, Dn) jusqu'à ladite position d'objet (41) et d'une taille de pixel attendue respective dudit objet (4) à ladite distance respective (D1, D2, D3, Dn) ;
***la détermination*** (1004) de la conformité respective de ladite taille de pixel attendue respective, avec des données d'image respectives (214, 224, 234, 2n4) dudit environnement (5) dérivées de chacune desdites caméras (21, 22, 23, 2n) ; et
***le fait d'attribuer*** (1005) à chacune desdites caméras (21, 22, 23, 2n) une évaluation respective sur la base de la conformité déterminée respective.

2. Procédé selon la revendication 1, dans lequel ladite ***détermination*** (1004) de la conformité respective comprend la détermination de la conformité respective de ladite taille de pixel attendue respective, avec une taille de pixel (215, 225, 235, 2n5) d'une zone de délimitation (216, 226, 236), 2n6) d'un objet détecté (217, 227, 237, 2n7) dans des données d'image respectives (214, 224, 234, 2n4) dudit environnement (5) dérivées de chacune desdites caméras (21, 22, 23, 2n).

3. Procédé selon la revendication 1 ou 2, dans lequel l'évaluation d'au moins une caméra (21, 22, 23, 2n) desdites caméras (21, 22, 23, 2n) est en outre basée sur au moins un paramètre supplémentaire, comprenant un ou plusieurs des éléments suivants :
les propriétés de caméra (212, 222, 232, 2n2) de ladite au moins une caméra (21, 22, 23, 2n) ;
la distance (D1, D2, D3, Dn) entre ladite au moins une caméra (21, 22, 23, 2n) et ladite position d'objet (41) ;
la position géographique (211, 222, 232, 2n2) de ladite au moins une caméra (21, 22, 23, 2n) ;
le champ de vision potentiel (213, 223, 233, 2n3) de ladite au moins une caméra (21, 22, 23, 2n) ;
une fonctionnalité de vision panoramique, d'inclinaison et/ou de zoom de ladite au moins une caméra (21, 22, 23, 2n) ;
un spectre de ladite au moins une caméra (21, 22, 23, 2n) ;
une capacité de suivi automatique de ladite au moins une caméra (21, 22, 23, 2n) ;
une orientation dudit objet physique (4) par rapport à ladite au moins une caméra (21, 22, 23, 2n) ;
une indisponibilité de ladite au moins une caméra (21, 22, 23, 2n) ;
un moment présent ; et/ou
une condition météorologique.

4. Procédé selon l'une quelconque des revendications 1 à 3, dans lequel une ou plusieurs desdites caméras (21, 22, 23, 2n) est une caméra à vision panoramique, inclinaison et zoom, VPIZ.

5. Procédé selon l'une quelconque des revendications 1 à 4, comprenant en outre :
***la sélection*** (1006) d'une caméra parmi lesdites caméras sur la base de ladite évaluation respective.

6. Procédé selon la revendication 5, comprenant en outre :
***la réception*** (1007) à un moment ultérieur, de données d'informations ultérieures (83) indiquant une position d'objet géographique ultérieure (81) et des caractéristiques d'objet ultérieures (82) d'un objet physique ultérieur (8) positionné dans ledit environnement (5) ;
***la détermination*** (1008) pour la caméra sélectionnée (23), en comparant ladite position d'objet ultérieure (81) et les caractéristiques d'objet ultérieures (82) avec la position de caméra (231) et les propriétés de caméra (232) de la caméra sélectionnée (23), d'une distance ultérieure (Ds) à ladite position d'objet ultérieure (81) et d'une taille de pixels ultérieure attendue dudit objet ultérieur (8) à ladite distance ultérieure (Ds) ;
***la détermination*** (1009) de la conformité de ladite taille de pixel ultérieure attendue (240) avec les données d'image ultérieures (238) dudit environnement (5) dérivées de ladite caméra sélectionnée (23) ; et
***la sélection*** (1010) d'une caméra (21, 22, 2n) autre que ladite caméra sélectionnée (23) parmi lesdites caméras (21, 22, 23, 2n), sur la base de ladite évaluation respective attribuée, lorsque la conformité ultérieure est inférieure à un seuil de visibilité.

7. **Système d'évaluation** (1) pour la priorisation parmi les caméras (21, 22, 23, 2n) d'un agencement à caméras multiples (2), ledit système d'évaluation (1) comprenant :
une **unité d'obtention de caméra** (101) pour ***obtenir*** (1001) la position géographique de la caméra (211, 221, 231, 2n1) et les propriétés de caméra (212, 222, 232, 2n2) de chacune desdites caméras (21, 22, 23, 2n) ;
une **unité de réception d'objet physique** (102) pour ***recevoir*** (1002), par exemple à partir d'un système de surveillance (3) en relation avec ledit système d'évaluation (1), des données d'information (43) indiquant une position géographique d'objet (41) et des caractéristiques d'objet (42) d'un objet physique géolocalisé (4) déterminé comme étant positionné dans un environnement (5) dans un champ de vision potentiel (213, 223, 233, 2n3) de chacune desdites caméras (21, 22, 23, 2n) ;
une **unité de détermination d'attentes** (103) pour ***déterminer*** (1003) pour chacune desdites caméras (21, 22, 23, 2n), en comparant ladite position d'objet (41) et lesdites caractéristiques d'objet (42) avec ladite position de caméra respective (211, 221, 231, 2n1) et lesdes propriétés de caméra (212, 222, 232, 2n2), une distance respective (D1, D2, D3, Ds) à ladite position d'objet (41) et une taille de pixel attendue respective dudit objet (4) à ladite distance respective (D1, D2, D3, Dn) ;
une **unité de détermination de conformité** (104) pour ***déterminer*** (1004) la conformité respective de ladite taille de pixel attendue respective, avec des données d'image respectives (214, 224, 234, 2n4) dudit environnement (5) dérivées de chacune desdites caméras (21, 22, 23, 2n) ; et
une **unité d'attribution** (105) pour ***attribuer*** (105) à chacune desdites caméras (21, 22, 23, 2n) une évaluation respective sur la base de la conformité déterminée respective.

8. Système d'évaluation (1) selon la revendication 7, dans lequel ladite unité de détermination de conformité (104) est adaptée pour déterminer la conformité respective de ladite taille de pixel attendue respective, avec une taille de pixel (215, 225, 235, 2n5) d'une zone de délimitation (216, 226, 236, 2n6) d'un objet détecté (217, 227, 237, 2n7) dans des données d'image respectives (214, 224, 234, 2n4) dudit environnement (5) dérivées de chacune desdites caméras (21, 22, 23, 2n).

9. Système d'évaluation (1) selon la revendication 7 ou 8, dans lequel l'évaluation d'au moins une caméra (21, 22, 23, 2n) desdites caméras (21, 22, 23, 2n) est en outre basée sur au moins un paramètre supplémentaire, comprenant un ou plusieurs des éléments suivants :
les propriétés de caméra (212, 222, 232, 2n2) de ladite au moins une caméra (21, 22, 23, 2n) ;
la distance (D1, D2, D3, Dn) entre ladite au moins une caméra (21, 22, 23, 2n) et ladite position d'objet (41) ;
la position géographique (211, 222, 232, 2n2) de ladite au moins une caméra (21, 22, 23, 2n) ;
le champ de vision potentiel (213, 223, 233, 2n3) de ladite au moins une caméra (21, 22, 23, 2n) ;
une fonctionnalité de vision panoramique, d'inclinaison et/ou de zoom de ladite au moins une caméra (21, 22, 23, 2n) ;
un spectre de ladite au moins une caméra (21, 22, 23, 2n) ;
une capacité de suivi automatique de ladite au moins une caméra (21, 22, 23, 2n) ;
une orientation dudit objet physique (4) par rapport à ladite au moins une caméra (21, 22, 23, 2n) ;
une indisponibilité de ladite au moins une caméra (21, 22, 23, 2n) ;
un moment présent ; et/ou
une condition météorologique.

10. Système d'évaluation (1) selon l'une quelconque des revendications 7 à 9, dans lequel une ou plusieurs desdites caméras (21, 22, 23, 2n) est une caméra à vision panoramique, inclinaison et zoom, VPIZ.

11. Système d'évaluation (1) selon l'une quelconque des revendications 7 à 10, comprenant en outre :
une **unité de sélection de caméra** (106) pour ***sélectionner*** (1006) une caméra (23) parmi lesdites caméras (21, 22, 23, 2n) sur la base de ladite évaluation respective.

12. Système d'évaluation (1) selon la revendication 11, comprenant en outre :
une **unité de réception d'objet ultérieure** (107) destinée à ***recevoir*** (1007) à un moment ultérieur, des données d'informations ultérieures (83) indiquant une position d'objet géographique ultérieure (81) et des caractéristiques d'objet ultérieures (82) d'un objet physique ultérieur (8) positionné dans ledit environnement (5) ;
une **unité de détermination d'attentes ultérieures** (108) destinée à ***déterminer*** (1008) pour la caméra sélectionnée (23), en comparant ladite position d'objet ultérieure (81) et les caractéristiques d'objet ultérieures (82) avec la position de caméra (231) et les propriétés de caméra (232) de la caméra sélectionnée (23), une distance ultérieure (Ds) à ladite position d'objet ultérieure (81) et une taille de pixels ultérieure attendue dudit objet ultérieur (8) à ladite distance ultérieure (Ds) ;
une **unité de détermination de conformité ultérieure** (109) pour ***déterminer*** (1009) la conformité de ladite taille de pixel ultérieure attendue (240), avec des données d'image ultérieures (238) dudit environnement (54) dérivées de ladite caméra sélectionnée (23) ; et
une **unité de sélection d'une autre caméra** (110) pour ***sélectionner*** (1010) une caméra (21, 22, 2n) autre que ladite caméra sélectionnée (23) parmi lesdites caméras (21, 22, 23, 2n), sur la base de ladite évaluation respective attribuée, lorsque la conformité ultérieure est inférieure à un seuil de visibilité.

13. **Système de surveillance** (3) comprenant un système d'évaluation (1) selon l'une quelconque des revendications 7 à 12.

14. Produit-programme informatique comprenant un programme informatique contenant un moyen de code de programme informatique agencé pour amener un ordinateur ou un processeur à exécuter les étapes d'un procédé selon l'une quelconque des revendications 1 à 6, stocké sur un support lisible par ordinateur ou sur une onde porteuse.

15. Support de stockage non volatile lisible par ordinateur sur lequel est stocké le produit-programme informatique selon la revendication 14.
